# EUROPEAN PATENT APPLICATION

(11) **EP 4 614 580 A1**
(43) Date of publication of application: **10.09.2025**
(21) Application number: 24807535.0
(22) Date of filing: 14.05.2024
(51) Int. Cl.: H01M 4/04, B23K 26/38, H01M 50/533

(54) **ELECTRODE MANUFACTURING DEVICE AND ELECTRODE MANUFACTURING METHOD**

(30) Priority: 16.05.2023 KR 20230063049
(71) Applicant: LG Energy Solution, Ltd., Seoul 07335 (KR)
(72) Inventor: LIM, Jae June, Daejeon 34122 (KR)
(74) Representative: Goddar, Heinz J.
(86) International application number: PCT/KR2024/006563
(87) International publication number: WO 2024/237664

(57) **Abstract**

An electrode manufacturing device according to one embodiment of the present disclosure comprises: a laser cutting part that cuts at least a part of the electrode; a jig part that forms a predetermined pattern on at least a part of the electrode during cutting of the laser cutting part; a foreign matter removal part that removes a foreign matter of the jig part; and an inspection part that inspects presence/absence of foreign matter in the jig part, wherein, when a foreign matter of the jig part is not confirmed from the inspection part, the jig part moves to a position corresponding to the laser cutting part, and when a foreign matter of the jig part is confirmed from the inspection part, the jig part moves to a position corresponding to the foreign matter removal part.

## Description

### [TECHNICAL FIELD]

### Cross Citation with Related Application(s)

This application claims the benefit of Korean Patent Application No. 10-2023-0063049 filed on May 16, 2023 in the Korean Intellectual Property Office, the disclosure of which is incorporated herein by reference in its entirety.

The present disclosure relates to an electrode manufacturing device and an electrode manufacturing method, and more particularly, to an electrode manufacturing device and an electrode manufacturing method which improves the defect rate caused by non-cutting of electrodes and prevents a decrease in productivity caused by electrode breakage.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, a secondary battery may be classified into a cylindrical battery having an electrode assembly mounted in a cylindrical metal container, a prismatic battery having an electrode assembly mounted in a prismatic metal container, or a pouch type battery having an electrode assembly mounted in a pouch-shaped case made of an aluminum laminate sheet. Here, the electrode assembly mounted in the battery case serves as a power generating element capable of charging/discharging and including a stacked structure of a cathode, an anode and a separator interposed between the cathode and the anode. The electrode assembly may be classified into jelly-roll types formed by interposing a separator between a long sheet type cathode and a long sheet type anode and winding them, and stacked types formed by sequentially stacking a plurality of cathodes and anodes with separators being interposed between the cathode and the anode.

Among these, particularly, the usage of a pouch-shaped battery configured to have a structure in which such a stacked type or stacked/folded type electrode assembly is mounted in a pouch-shaped battery case made of an aluminum laminate sheet has gradually increased because of low manufacturing costs, light weight, easy modification in shape, etc.

In particular, electrodes included in secondary batteries are manufactured by coating an electrode active material onto an electrode current collector, and a part of the manufactured electrode is notched to process (cut) the electrode tab, so that the electrode tab is manufactured into a desired shape. A conventional electrode manufacturing device includes a jig part having a predetermined pattern or shape and a laser cutting part, thereby facilitating the processing of the electrode tab based on the pattern or shape of the jig part.

However, a conventional electrode manufacturing device may cause accumulation of foreign matters in the inside of the pattern or shape of the jig part due to the processing (cutting) process or the external environment. Foreign matters accumulated inside the pattern or shape of the jig part may hinder laser cutting, which causes a problem that the electrode tab is not processed into the desired pattern or shape. The non-cutting portion of the electrode tab may cause defects such as breakage of the electrode tab or folding of the tab, which causes a problem such as an increase in process loss and non-operating time and a decrease in productivity.

Therefore, there is a need to develop an electrode manufacturing device and an electrode manufacturing method that improve the defect rate caused by non-cutting of electrodes and prevent a decrease in productivity caused by electrode breakage.

### [DETAILED DESCRIPTION OF THE INVENTION]

### [Technical Problem]

It is an object of the present disclosure to provide an electrode manufacturing device and an electrode manufacturing method that improve the defect rate caused by non-cutting of electrodes and prevent a decrease in productivity caused by electrode breakage.

The technical objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided an electrode manufacturing device comprising: a laser cutting part that cuts at least a part of the electrode; a jig part that forms a predetermined pattern on at least a part of the electrode during cutting of the laser cutting part; a foreign matter removal part that removes a foreign matter of the jig part; and an inspection part that inspects presence/absence of foreign matter in the jig part, wherein, when a foreign matter of the jig part is not confirmed from the inspection part, the jig part moves to a position corresponding to the laser cutting part, and when a foreign matter of the jig part is confirmed from the inspection part, the jig part moves to a position corresponding to the foreign matter removal part.

When the foreign matter of the jig part is removed from the foreign matter removal part, the jig part moves again to a position corresponding to the inspection part, and the inspection part may confirm whether or not the foreign matter of the jig part has been removed.
when the foreign matter of the jig part is not reconfirmed from the inspection part, the jig part moves to a position corresponding to the laser cutting part, and when the foreign matter of the jig part is reconfirmed from the inspection part, the jig part may be detached.

The inspection part determines that a foreign matter of the jig part is unconfirmed when the area in which no foreign matter is formed is 90% or more and 100% or less based on the total area of the pattern formed on the jig part, and the inspection part determines that a foreign matter is confirmed when the area in which no foreign matter is formed is 0% or more and less than 90% based on the total area of the pattern formed on the jig part.

The inspection part is a vision camera, and the inspection part may confirm the foreign matter of the jig part based on the image acquired by the vision camera.

The jig part may rotate and move to positions corresponding to the laser cutting part, the foreign matter removal part and the inspection part.

The electrode manufacturing device further comprises a main body in which the jig part is located inside, wherein as the main body rotates, the jig part may rotate.

The laser cutting part, the foreign matter removal part, and the inspection part may be respectively located on the outer peripheral surface of the main body.

The main body may have a drum structure formed in a cylindrical shape.

The inspection part and the foreign matter removal part are located spaced apart from each other in a direction opposite to each other, and the laser cutting part may be located between the inspection part and the foreign matter removal part.

The jig part includes a jig main body and a jig pattern part located at the center of the jig main body, and the inspection part may confirm presence/absence of foreign matter in the jig pattern part.

According to another embodiment of the present disclosure, there is provided an electrode manufacturing method for manufacturing an electrode using the above-mentioned electrode manufacturing, the method comprising: a jig part foreign matter confirming step of moving the jig part to a position corresponding to an inspection part, and confirming presence/absence of foreign matter in the jig part through the inspection part; a jig part moving step of moving the jig part to a position corresponding to a laser cutting part or a foreign matter removal part in accordance with presence/absence of foreign matter in the jig part; and a foreign matter removing step of removing the foreign matter of the jig part through the foreign matter removal part when the jig part moves to a position corresponding to the foreign matter removal part, wherein in the jig part moving step, when a foreign matter of the jig part is not confirmed, the jig part moves to a position corresponding to the laser cutting part, and when a foreign matter of the jig part is confirmed, the jig part moves to a position corresponding to the foreign matter removal part.

In the foreign matter removing step, after the foreign matter removal part removes the foreign matter of the jig part, the method may further comprise a jig part re-movement step of moving the jig part again to a position corresponding to the inspection part; and a jig part foreign matter reconfirming step of reconfirming presence/absence of foreign matter in the jig part through the inspection part.

When a foreign matter of the jig part is not reconfirmed from the inspection part, the method may further comprise a step of moving the jig part to a position corresponding to the laser cutting part.

When a foreign matter of the jig part is reconfirmed from the inspection part, the method further comprises a step of detaching the jig part, wherein the detached jig part may be replaced with another jig part, or the user may directly remove the foreign matter of the jig part.

### [Advantageous Effects]

According to embodiments, an electrode manufacturing device and an electrode manufacturing method of the present disclosure can remove the foreign matter of a jig part through a foreign matter removal part and then reconfirm whether or not the foreign matter has been removed through an inspection part, thereby improving non-cutting of electrodes and a defect rate resulting therefrom and preventing a decrease in productivity caused by electrode breakage.

Effects of the present disclosure are not limited to the effects mentioned above, and additional other effects not mentioned herein will be clearly understood from the detailed description and the appended claims by those skilled in the art.

### [BRIEF DESCRIPTION OF THE DRAWINGS]

FIG. 1 is a diagram showing an electrode manufacturing device according to one embodiment of the present disclosure.
FIG. 2 is an enlarged view showing a part of the electrode manufacturing device of FIG. 1.
FIG. 3 is a diagram showing a cross section of the jig part of FIG. 2.
FIG. 4 is a flowchart explaining the operating sequence of the electrode manufacturing device of FIG. 2.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are not related to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, an electrode manufacturing device according to one embodiment of the present disclosure will be described.

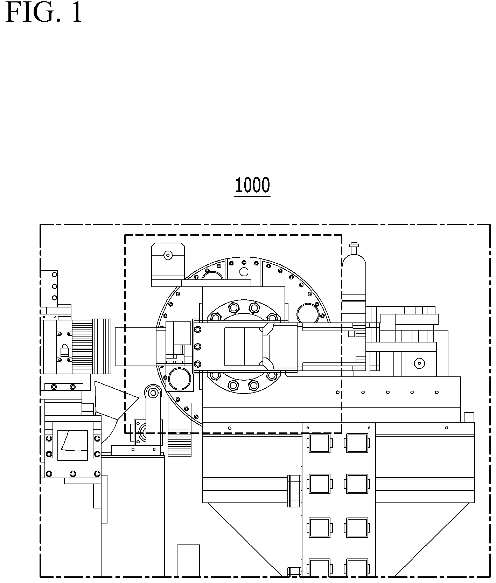

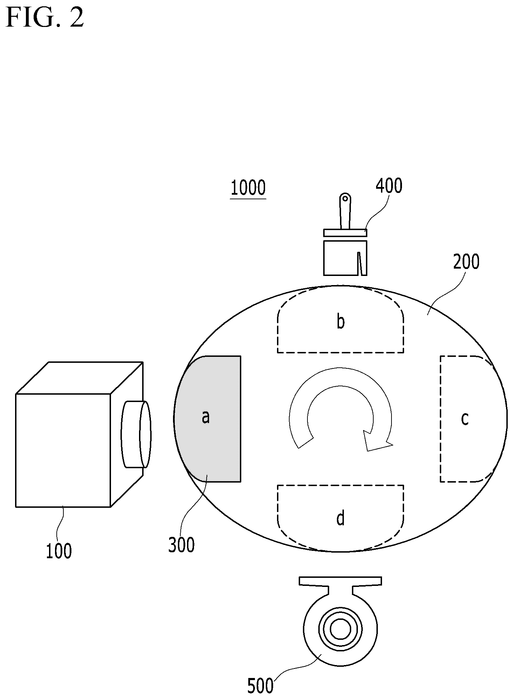

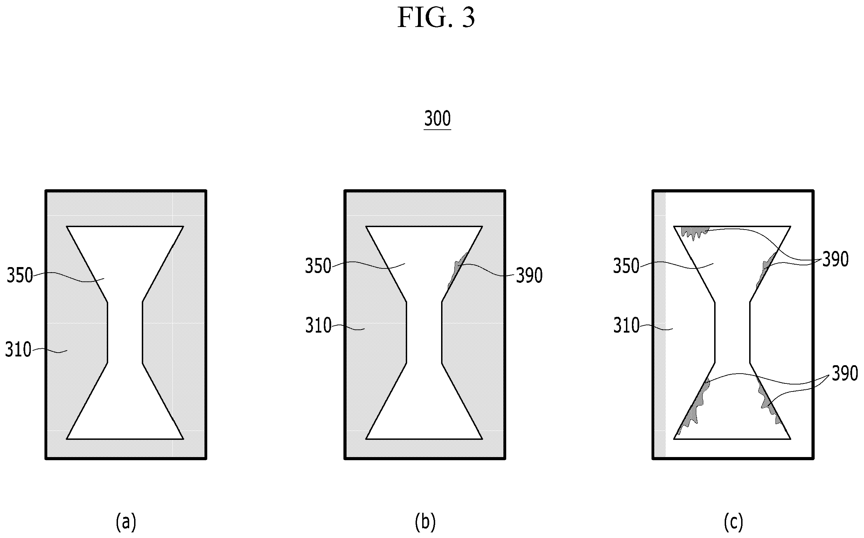

FIG. 1 is a diagram showing an electrode manufacturing device according to one embodiment of the present disclosure. FIG. 2 is an enlarged view showing a part of the electrode manufacturing device of FIG. 1. FIG. 3 is a diagram showing a cross section of the jig part of FIG. 2.

Referring to FIGS. 1 and 2, an electrode manufacturing device 1000 according to one embodiment of the present disclosure comprises a laser cutting part 100 that cuts at least a part of the electrode; a jig part 300 that forms a predetermined pattern on at least a part of the electrode during cutting of the laser cutting part 100; a foreign matter removal part 400 that removes a foreign matter of the jig part 300; and an inspection part 500 that inspects presence/absence of foreign matter in the jig part 300.

Although not specifically illustrated in the figure, the wound electrode is transported simultaneously with unwinding, and the laser cutting part 100 may irradiate the transferred electrode with a laser to cut at least a part of the electrode. As an example, the electrode has an electrode current collector coated with an electrode active material, and the laser cutting part 100 can cut the electrode tab portion where no electrode active material is coated onto the electrode current collector. Here, the laser cutting part 100 may adjust the amount and speed of laser irradiation based on conditions such as the thickness of the electrode current collector or the coating thickness of the electrode active material.

Although not specifically illustrated in the figure, the jig part 300 supports the transferred electrode, and at the same time, the laser cutting part 100 facing the electrode can provide a shape or pattern for cutting the electrode. Referring to FIG. 3, the jig part 300 includes a jig main body 310 and a jig pattern part 350 located at the center of the jig main body 310. Here, the shape or pattern of the jig pattern part 350 is not limited to those illustrated in FIG. 3, and various shapes or patterns may be applied according to the cutting conditions of the electrode.

Therefore, in the electrode manufacturing device 1000 according to the present embodiment, the laser irradiated from the laser cutting part 100 passes through the jig pattern part 350 of the jig part 300, and the electrode may be cut according to the shape or pattern of the jig pattern part 350.

The foreign matter removal part 400 can automatically remove a foreign matter of the jig part 300. As an example, the foreign matter removal part 400 may include a brush member and/or a suction member. Here, the brush member can brush away foreign matters attached to the outer surface of the jig part 300. In other words, the brush member can brush the outer surface of the jig part 300. In addition, the suction member can remove foreign matter attached to the outer surface of the jig part 300 and/or foreign matter separated from the jig part 300 by the brush member.

Therefore, in the electrode manufacturing device 1000 according to the present embodiment, the foreign matter of the jig part 300 can be automatically removed through the foreign matter removal part 400, thereby preventing non-cutting of electrodes and tab folding defects due to foreign matters attached to the jig part 300. In addition, the electrode manufacturing device 1000 according to the present embodiment does not require the user to separate the jig part 300 separately to remove foreign matters, and can further improve productivity and production speed.

The inspection part 500 can confirm whether or not foreign matter is located inside the jig part 300. More specifically, the inspection part 500 can confirm presence/absence of foreign matter located inside the jig pattern part 350. As an example, the inspection part 500 may be a vision camera, and the inspection part 500 may confirm foreign matter of the jig part 300 based on the image acquired by the vision camera. More specifically, in the images acquired by the vision camera, the inspection part 500 compares the number of pixels containing foreign matter in the jig unit 300 with the number of pixels constituting the jig pattern part 350, and can confirm presence/absence of foreign matter in the jig part 300 and the degree of foreign matter in the jig part 300. As another example, the inspection part 500 may include a deep learning model learned in advance based on images acquired by the vision camera. Here, the deep learning model may be learned in advance so as to compare the number of pixels containing foreign matter in the jig part 300 based on the number of pixels constituting the jig pattern part 350 based on the image acquired by the vision camera. However, the device is not limited thereto, and can be included in the present embodiment as long as it is a device that can confirm foreign matters in the jig part 300.

More specifically, the inspection part 500 may determine that a foreign matter of the jig part 300 is unconfirmed, when the area in which no foreign matter is formed is 90% or more and 100% or less based on the total area of the pattern formed on the jig pattern part 350, and the inspection part 300 may determine that a foreign matter is confirmed when the area in which no foreign matter is formed is 0% or more and less than 90% based on the total area of the pattern formed on the jig pattern part 350. Here, the area may mean the sum of the areas of pixels included in the image acquired by the vision camera. However, the numerical range regarding the presence or absence of confirmation of foreign matter via the inspection part 500 is not limited thereto, and may be changed depending on the detailed settings of the inspection part 500.

Therefore, in the electrode manufacturing device 1000 according to the present embodiment, the inspection part 500 confirms presence/absence of foreign matter in the jig part 300 based on the above-mentioned numerical range, and can operate without equipment malfunction even when some foreign matters occur within the normal operating range of the electrode manufacturing device 1000.

Unlike the same, in the electrode manufacturing device 1000 according to the present embodiment, when the inspection part 500 confirms presence/absence of foreign matter in the jig part 300 based on a numerical range outside the above-mentioned numerical range, there is a problem that the equipment malfunction may occur and the productivity and production speed are reduced even when some foreign matters occur within the normal operating range of the electrode manufacturing device 1000.

Referring to FIG. 3, FIG. 3(a) shows a case in which the area where no foreign matter 390 is formed is 100% based on the total area of the pattern formed on the jig pattern part 350, and FIG. 3(b) shows a case in which the area where no foreign matter 390 is formed is 92%, and FIG. 3(c) shows a case where the area where no foreign matter 390 is formed is 75%.

As an example, the jig pattern part 350 of FIGS. 3(a) and 3(b) is a case in which the area in which the foreign matter 390 is not formed is 90% or more and less than 100% based on the total area of the pattern formed on the jig pattern part 350, and thus, the inspection part 500 may determine that the foreign matter 390 is not confirmed in the jig pattern part 350 of FIGS. 3(a) and 3(b). Unlike the same, the jig pattern part 350 of FIG. 3(c) is a case in which the area where the foreign matter 390 is not formed is 0% or more and less than 90% based on the total area of the pattern formed in the jig pattern part 350, and thus, the inspection part 500 may determine that the foreign matter 390 is confirmed in the jig pattern part 350 of FIG. 3(c).

Referring to FIGS. 1 and 2, the jig part 300 can rotate and move to positions corresponding to the laser cutting part 100, the foreign matter removal part 400, and the inspection part 500. More specifically, the present device further comprises a main body 200 in which the jig part 300 is located inside, wherein as the main body 200 rotates, the jig part 300 may rotate. More specifically, the corresponding position may mean that the corresponding components are positioned in a mutually facing state. Here, the laser cutting part 100, the foreign matter removal part 400, and the inspection part 500 may be respectively located on the outer peripheral surface of the main body 200.

As an example, the main body 200 may have a drum structure formed in a cylindrical shape. However, the structure is not limited thereto, and may be included in the present embodiment as long as it is a structure in which the jig part 300 can move to positions corresponding to the laser cutting part 100, the foreign matter removal part 400, and the inspection part 500.

As shown in FIG. 2, the inspection part 500 and the foreign matter removal part 400 are located spaced apart from each other in a direction opposite to each other, and the laser cutting part 100 may be located between the inspection part 500 and the foreign matter removal part 400. More specifically, the jig part 300 can rotate and move to positions a, b, c and d of the main body 200, as shown in FIG. 2. Here, the positions a, b, c and d may have an angle of 90 degrees to each other. Here, the laser cutting part 100 may be arranged at a position corresponding to the position (a) of the main body 200, the foreign matter removal part 400 may be arranged at a position corresponding to the position (b) of the main body 200, and the inspection part 500 may wait at a position corresponding to the position (d) of the main body 200. Here, the jig part 300 may standby at the position (c) of the main body unit 200. However, the positions of the laser cutting part 100, the foreign matter removal part 400, and the inspection part 500 are not limited thereto, and the positions of the laser cutting part 100, the foreign matter removal part 400 and the inspection part 500 may be changed appropriately.

Therefore, in the electrode manufacturing device 1000 according to the present embodiment, since the jig part 300 can be moved to positions corresponding to the laser cutting part 100, the foreign matter removal part 400 and the inspection part 500, there is the advantage that the foreign matter removal unit 400 has a foreign matter relative to the jig unit 300. There is an advantage that it is easy to confirm presence/absence of foreign matters in the jig part 300 through the foreign matter removal part 400, and it is easy to move to the laser cutting part 100 or the inspection part 500 according to the presence or absence of foreign matter.

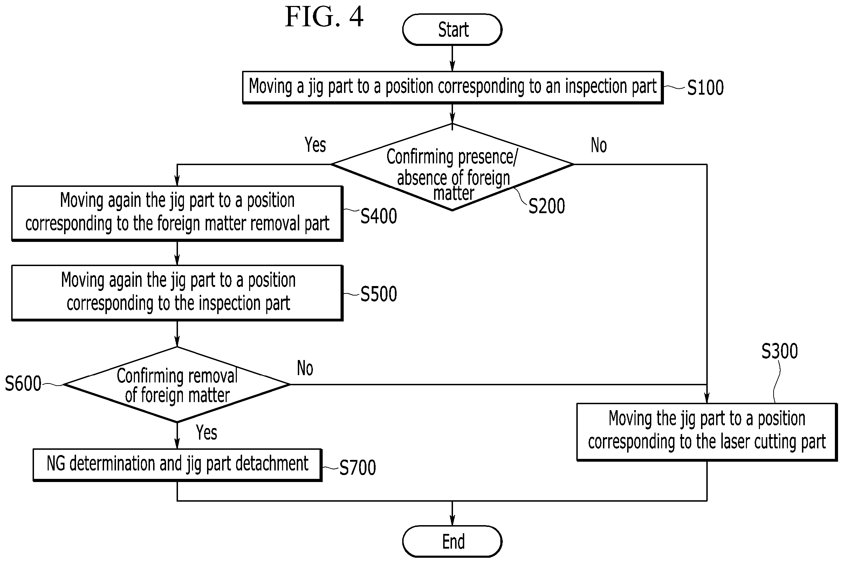

FIG. 4 is a flowchart explaining the operating sequence of the electrode manufacturing device of FIG. 2.

Referring to FIGS. 2 and 4, the jig part 300 may be moved to a position (d) corresponding to the inspection part 500 before the electrode is cut by the laser cutting part 100. Here, when foreign matter of the jig part 300 is not confirmed from the inspection part 500, the jig part 300 moves to the position (a) corresponding to the laser cutting part 100, and when a foreign matter of the jig part 300 is confirmed from the inspection part 500, the jig part 300 may move to a position (b) corresponding to the foreign matter removal part 400.

However, although FIG. 2 illustrates that the jig part 300 rotates in a clockwise direction, the rotation direction of the jig part 300 is not limited thereto, and a case in which the jig part 300 rotates in a counterclockwise direction may be included in the present embodiment.

Further, when the foreign matter of the jig part 300 is removed through the foreign matter removal part 400, the jig part 300 moves again to the position (d) corresponding to the inspection part 500, and the inspection part 500 can reconfirm presence/absence of foreign matter in the jig part 300.

Further, when the foreign matter of the jig unit 300 is not reconfirmed from the inspection part 500, the jig part 300 moves to the position (a) corresponding to the laser cutting part 100, and when the foreign matter of the jig part 300 is reconfirmed from the inspection part 500, the jig part 300 may be detached.

In particular, when the foreign matter of the jig part 300 is reconfirmed from the inspection part 500, the jig part 300 may move to the standby position (c). The jig part 300 located at the standby position (c) can be detached. The detached jig part 300 can confirm the condition of the jig part 300 by a user. If contamination of the jig part 300 exists, the user can remove the contamination directly, and if the jig part 300 is damaged, it can be replaced with another jig part.

Therefore, in the electrode manufacturing device 1000 according to the present embodiment, after the foreign matter of the jig part 300 is removed by the foreign matter removal part 400, the inspection part 500 can reconfirm presence/absence of foreign matter, which makes it possible to quantitatively manage the degree of foreign matter in the jig part 300. In addition, it is possible to prevent the degree of foreign matter in the jig part 300 from deepening beyond a certain level, thereby improving non-cutting of electrodes and a defect rate resulting therefrom and preventing a decrease in productivity caused by electrode breakage.

Next, an electrode manufacturing method according to another embodiment of the present disclosure will be described.

Referring to FIGS. 2 and 4, an electrode manufacturing method according to another embodiment of the present disclosure is an electrode manufacturing method for manufacturing an electrode using the above-mentioned electrode manufacturing device 1000, the method comprising: a jig part foreign matter confirming step (S100, S200) of moving the jig part to a position (d) corresponding to the inspection part 500, and confirming presence/absence of foreign matter in the jig part 300 through the inspection part 500; a jig part moving step (S300, S400) of moving the jig part 300 to a position (b) corresponding to a laser cutting part 100 or a foreign matter removal part 400 in accordance with presence/absence of foreign matter in the jig part 300; and a foreign matter removing step (S400) of removing the foreign matter of the jig part 300 through the foreign matter removal part 400 when the jig part 300 moves to a position (b) corresponding to the foreign matter removal part 400.

In the jig part moving step (S300, S400), when a foreign matter of the jig part 300 is not confirmed, the jig part moves to a position (a) corresponding to the laser cutting part 100, and when a foreign matter of the jig part 300 is confirmed, the jig part moves to a position (b) corresponding to the foreign matter removal part 400.

In the foreign matter removing step (S400), after the foreign matter removal part 400 removes the foreign matter of the jig part 300, the method may further comprise: a jig part re-movement step (S500) of moving again the jig part 300 to a position (d) corresponding to the inspection part 500; and a jig part foreign matter reconfirming step (S600) of reconfirming presence/absence of foreign matter in the jig part 300 through the inspection part 500.

In the jig part foreign matter reconfirming step (S600), when the foreign matter of the jig part 300 is not reconfirmed from the inspection part 500, the method further comprises a step (S300) of moving the jig part 300 to a position (a) corresponding to the laser cutting part 100.

In the jig part foreign matter reconfirming step (S600), when the foreign matter of the jig part 300 is reconfirmed from the inspection part 500, the method further comprises a step (S700) of detaching the jig part 300. Here, when the jig part 300 is detached, an NG determination is made, and the detached jig part 300 can be replaced with another jig part as described above, or the user can directly remove foreign matters of the jig part 300.

Therefore, in the electrode manufacturing method according to the present embodiment,

After the foreign matter is removed from the jig part 300 by the foreign matter removal part 400, the inspection part 500 can reconfirm presence/absence of foreign matter, thereby quantitatively managing the degree of foreign matter in the jig part 300. In addition, it is possible to prevent the degree of foreign matter in the jig part 300 from deepening beyond a certain level, thereby improving the non-cutting of electrodes and the defect rate resulting therefrom and preventing a decrease in productivity caused by electrode breakage.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

100: laser cutting part
200: main body
300: jig part
310: jig main body
350: jig pattern part
400: foreign matter removal part
500: inspection part
1000: electrode manufacturing device

## Claims

1. An electrode manufacturing device comprising:
a laser cutting part that cuts at least a part of the electrode;
a jig part that forms a predetermined pattern on at least a part of the electrode during cutting of the laser cutting part;
a foreign matter removal part that removes a foreign matter of the jig part; and
an inspection part that inspects presence/absence of foreign matter in the jig part, wherein, when a foreign matter of the jig part is not confirmed from the inspection part, the jig part moves to a position corresponding to the laser cutting part, and
when a foreign matter of the jig part is confirmed from the inspection part, the jig part moves to a position corresponding to the foreign matter removal part.

2. The electrode manufacturing device of claim 1, wherein:
when a foreign matter of the jig part is removed from the foreign matter removal part, the jig part moves again to a position corresponding to the inspection part, and
the inspection part reconfirms whether or not the foreign matter of the jig part has been removed.

3. The electrode manufacturing device of claim 2, wherein:
when a foreign matter of the jig part is not reconfirmed from the inspection part, the jig part moves to a position corresponding to the laser cutting part, and
when a foreign matter of the jig part is reconfirmed from the inspection part, the jig part is detached.

4. The electrode manufacturing device of claim 3, wherein:
the inspection part determines that a foreign matter of the jig part is unconfirmed, when the area in which no foreign matter is formed is 90% or more and 100% or less based on the total area of the pattern formed on the jig part, and
the inspection part determines that a foreign matter is confirmed when the area in which no foreign matter is formed is 0% or more and less than 90% based on the total area of the pattern formed on the jig part.

5. The electrode manufacturing device of claim 1, wherein:
the inspection part is a vision camera, and
the inspection part confirms the foreign matter of the jig part based on the image acquired by the vision camera.

6. The electrode manufacturing device of claim 1, wherein:
the jig part rotates and moves to positions corresponding to the laser cutting part, the foreign matter removal part and the inspection part.

7. The electrode manufacturing device of claim 6,
further comprising a main body in which the jig part is located inside,
wherein as the main body rotates, the jig part rotates.

8. The electrode manufacturing device of claim 7, wherein:
the laser cutting part, the foreign matter removal part, and the inspection part are respectively located on the outer peripheral surface of the main body.

9. The electrode manufacturing device of claim 8, wherein:
the main body has a drum structure formed in a cylindrical shape.

10. The electrode manufacturing device of claim 8, wherein:
the inspection part and the foreign matter removal part are located spaced apart from each other in a direction opposite to each other, and
the laser cutting part is located between the inspection part and the foreign matter removal part.

11. The electrode manufacturing device of claim 1, wherein:
the jig part includes a jig main body and a jig pattern part located at the center of the jig main body, and
the inspection part confirms presence/absence of foreign matter in the jig pattern part.

12. An electrode manufacturing method for manufacturing an electrode using the electrode manufacturing device of claim 1, the method comprising:
a jig part foreign matter confirming step of moving the jig part to a position corresponding to an inspection part, and confirming presence/absence of foreign matter in the jig part through the inspection part;
a jig part moving step of moving the jig part to a position corresponding to a laser cutting part or a foreign matter removal part in accordance with presence/absence of foreign matter in the jig part; and
a foreign matter removing step of removing the foreign matter of the jig part through the foreign matter removal part when the jig part moves to a position corresponding to the foreign matter removal part,
wherein in the jig part moving step, when a foreign matter of the jig part is not confirmed, the jig part moves to a position corresponding to the laser cutting part, and when a foreign matter of the jig part is confirmed, the jig part moves to a position corresponding to the foreign matter removal part.

13. The electrode manufacturing method of claim 12, wherein:
in the foreign matter removing step, after the foreign matter removal part removes the foreign matter of the jig part, the method further comprises:
a jig part re-movement step of moving again the jig part to a position corresponding to the inspection part; and
a jig part foreign matter reconfirming step of reconfirming presence/absence of foreign matter in the jig part through the inspection part.

14. The electrode manufacturing method of claim 13, wherein:
in the jig part foreign matter reconfirming step, when a foreign matter of the jig part is not reconfirmed from the inspection part, the method further comprises a step of moving the jig part to a position corresponding to the laser cutting part.

15. The electrode manufacturing method of claim 14, wherein:
in the jig part foreign matter reconfirming step, when a foreign matter of the jig part is reconfirmed from the inspection part, the method further comprises a step of detaching the jig part,
wherein the detached jig part is replaced with another jig part, or the user directly removes the foreign matter of the jig part.
